# EUROPÄISCHE PATENTSCHRIFT

(11) **EP 3 140 566 B1**
(45) Veröffentlichungstag und Bekanntmachung des Hinweises auf die Patenterteilung: **30.09.2020**
(21) Anmeldenummer: 15721556.7
(22) Anmeldetag: 14.04.2015
(51) Int. Cl.: F16F 15/14

(54) **FLIEHKRAFTPENDEL MIT AXIALER WÄLZLAGERUNG**
CENTRIFUGAL PENDULUM ABSORBER WITH AXIAL ROLLER BEARING
AMORTISSEUR HARMONIQUE AVEC UN PENDULE CENTRIFUGE ET ROULEMENTS À ROULEAUX AXIALE

(30) Priorität: 06.05.2014 DE 102014208467
(43) Veröffentlichungstag der Anmeldung: 15.03.2017
(73) Patentinhaber: Schaeffler Technologies AG & Co. KG, 91074 Herzogenaurach (DE)
(72) Erfinder: FENDER-OBERLE, Vincent, F-67150 Erstein-Krafft (FR)
(86) Internationale Anmeldenummer: PCT/DE2015/200257
(87) Internationale Veröffentlichungsnummer: WO 2015/169306

(56) Entgegenhaltungen:
- WO-A2-2011/076169
- DE-A1- 10 013 652
- DE-A1- 19 954 273
- DE-A1-102010 029 464
- DE-A1-102012 219 959
- FR-A1- 2 986 592

## Beschreibung

Die Erfindung betrifft eine Fliehkraftpendeleinrichtung zur Anordnung im Antriebsstrang eines Kraftfahrzeugs, mit wenigstens einem Pendel, das an einem Pendelflansch angeordnet ist und entlang einer vorgegebenen Pendelbahn eine Relativbewegung zu dem Pendelflansch ausführen kann, um hierbei einen variablen Abstand zur Rotationsachse des Pendelflansches einzunehmen, wobei das Pendel zwischen Seitenflanschen des Pendelflansches angeordnet ist und sich an Rollen abstützt, welche in Langlöchern des Pendels und der Seitenflansche gelagert sind. Die Erfindung betrifft des Weiteren einen Antriebsstrang eines Kraftfahrzeuges mit einer solchen Fliehkraftpendeleinrichtung.

Zur Reduktion von Torsionsschwingungen werden auf einem rotierenden Teil des Torsionsschwingungssystems zusätzliche bewegliche Massen als so genannte Pendelmassen angebracht. Diese Massen führen im Feld der Zentrifugalbeschleunigung Schwingungen auf vorgegebenen Bahnen aus, wenn sie durch Drehzahlungleichförmigkeiten angeregt werden. Durch diese Schwingungen wird der Erregerschwingung zu passenden Zeiten Energie entzogen und wieder zugeführt, sodass es zu einer Dämpfung der Erregerschwingung kommt, die Pendelmasse also als Schwingungstilger wirkt. Da sowohl die Eigenfrequenz der Fliehkraftpendelschwingung als auch die Erregerfrequenz proportional zur Drehzahl sind, kann eine Tilgerwirkung eines Fliehkraftpendels über den ganzen Frequenzbereich der durch Drehzahlungleichheiten angeregten Schwingungen erzielt werden. Eine Fliehkraftpendeleinrichtung der betreffenden Art dient insbesondere der Reduzierung von Schwingungen und Geräuschen im Antriebsstrang eines Kraftfahrzeugs. Eine solche Fliehkraftpendeleinrichtung umfasst wenigstens eine Pendelmasse, die beispielsweise mittels Rollen oder dergleichen an einem rotierenden Trägerelement aufgehängt ist und entlang vorgegebener Pendelbahnen eine Relativbewegung zu dem Trägerelement ausführen kann, um hierbei einen variablen Abstand zur Rotationsachse des Trägerelements einzunehmen. Der Aufbau und die Funktion einer solchen Fliehkraftpendeleinrichtung ist beispielsweise in der DE 10 2006 028 552 A1 beschrieben.

Die Fliehkraftpendel sind entweder, wie in der DE 10 2006 028 552 A1 beschrieben, beiderseits einer Trägerscheibe angeordnet oder werden, wie beispielsweise in der DE 10 2012 212 970 A1 beschrieben, von zwei Führungsblechen bzw. Seitenflanschen eines Pendelflansches eingefasst. In der DE 100 13 652 A1 und in der DE 10 2010 029 464 A1 werden Fliehkraftpendeleinrichtungen nach dem Oberbegriff des Anspruchs 1 beschrieben.

Bei beiderseits der Trägerscheibe angeordneten Pendelmassen sind Borde beiderseits der Trägerscheibe angeordnet und legen die Pendel in axialer Richtung gegenüber der Trägerscheibe fest.

Sind die Pendelmassen beiderseits von Seitenflanschen eingefasst, so bestehen die Pendel meist aus drei Lagen, diese sind zwei äußere Pendelmassen und eine mittlere Pendelmasse. Die Rollen, mit denen die Pendel an den Seitenflanschen als Teil des Trägerelementes aufgehängt sind, umfassen mittig einen umlaufenden Ring, der in einem Langloch der mittleren Pendelmasse mit entsprechender lichter Weite geführt ist und die Rolle axial festlegt, da die Lichte Weite der Langlöcher, die in äußeren Pendelmassen angeordnet sind, geringer als die lichte Weite in der mittleren Pendelmasse sind. Die lichte Weite der in den Seitenflanschen angeordneten Langlöcher ist wiederum geringer als die lichte Weite der in den äußeren Pendelmassen angeordneten Langlöcher, sodass Zentrierborde im Übergang des größeren Durchmessers der Rolle im Bereich der äußeren Pendelmassen zu geringeren Durchmessern der Rolle im Bereich der Seitenflansche an den Innenflächen der Seitenflansche anliegen und die Pendel so axial gegenüber den Seitenflanschen zentrieren und ein Anlaufen der Pendel an die Seitenlaschen verhindern.

Es hat sich gezeigt, dass die Zentrierborde einen unzulässig hohen Verschleiß aufweisen können.

Eine Aufgabe der Erfindung ist es daher, eine axiale Lagerung der Pendel mit geringerem Verschleiß anzugeben.

Dieses Problem wird durch eine Fliehkraftpendeleinrichtung nach Anspruch 1 gelöst. Bevorzugte Ausführungsformen bzw. Ausgestaltungen oder Weiterbildungen der Erfindung sind in den abhängigen Ansprüchen angegeben.

Das oben genannte Problem wird insbesondere gelöst durch eine Fliehkraftpendeleinrichtung zur Anordnung im Antriebsstrang eines Kraftfahrzeugs, mit wenigstens einem Pendel, das an einem Pendelflansch angeordnet ist und entlang einer vorgegebenen Pendelbahn eine Relativbewegung zu dem Pendelflansch ausführen kann, um hierbei einen variablen Abstand zur Rotationsachse des Pendelflansches einzunehmen, wobei das Pendel zwischen Seitenflanschen des Pendelflansches angeordnet ist und sich an Rollen abstützt, welche in Langlöchern des Pendels und Langlöchern der Seitenflansche gelagert sind, wobei das Pendel mit mindestens einem Wälzmittel gegenüber zumindest einem der Seitenflansche gelagert ist. Das Wälzmittel wirkt als ein Axial-Wälzlager, bewirkt also eine Lagerung des Pendels in axialer Richtung gegenüber dem Pendelflansch. Das Pendel ist vorzugsweise mit mindestens einem Wälzmittel axial gegenüber zumindest einem der Seitenflansche gelagert. Das Wälzmittel wälzt bei einer Relativbewegung des Pendels gegenüber dem Seitenflansch auf einem oder beiden Partnern ab. Vorzugsweise umfasst die Fliehkraftpendeleinrichtung zwei oder mehr Pendel. Wird nachfolgend die Einzahl für das Pendel verwendet, so beziehen sich die Angaben auf mindestens eines der mehreren Pendel oder auf mehrere der Pendel oder alle Pendel der Fliehkraftpendeleinrichtung. Das Wälzmittel ist erfindungsgemäß eine Kugel. Die Oberflächen, auf denen das Wälzmittel abrollt, sind in einer Ausführungsform der Erfindung oberflächengehärtet.

Die zumindest eine Kugel ist erfindungsgemäß in zumindest einer Nut in dem Pendel angeordnet. Die Kugel rollt auf dem Boden der Nut ab und wird durch deren Seitenwände geführt. Die Nutenden können abgerundet sein. Die Nut hat vorzugsweise einen rechteckigen Querschnitt mit einer axialen Tiefe, die geringer ist als der Kugeldurchmesser und einer radialen Breite, die größer ist als der Kugeldurchmesser, sodass die Kugel über die Oberfläche des Pendels in axialer Richtung hinausragt und mit Spiel das Langloch entlangrollen kann.

Das Pendel umfasst erfindungsgemäß eine mittlere Pendelmasse und beiderseits dieser angeordnete äußere Pendelmassen, wobei in zumindest einer der äußeren Pendelmassen mindestens ein Langloch angeordnet ist. Das Pendel umfasst eine mittlere Pendelmasse und beiderseits dieser angeordnete äußere Pendelmassen. Die Pendelmassen werden einzeln gefertigt, beispielsweise durch Stanzen, und sodann miteinander zu dem Pendel verbunden, wobei zugleich die Rollen eingebaut werden. Da die Pendelmassen einzeln gefertigt werden kann die mittlere Pendelmasse gehärtet sein, ohne dass die äußeren Pendelmassen gehärtet sein müssen. Durch das Langloch in der äußeren Pendelmasse entsteht bei der Montage des Pendels eine Nut zur Führung der Kugeln.

Der Durchmesser der Kugel ist erfindungsgemäß größer als die Dicke der äußeren Pendelmasse. Dadurch ragt die Kugel über die Oberfläche des Pendels in axialer Richtung hinaus, wenn die Nut durch ein Langloch in der äußeren Pendelmasse gebildet wird.

Beiderseits des Pendels ist in einer Ausführungsform der Erfindung jeweils mindestens eine Kugel, vorzugsweise zwei Kugeln, angeordnet. Dadurch wird das Pendel auf beiden Seiten mit Wälzmitteln gelagert und zumindest bei zwei Kugeln je Seite auch gegen Verkanten gesichert.

Die Langlöcher bzw. Nuten sind in einer Ausführungsform der Erfindung gekrümmt. Die Krümmung ist an die Pendelbahn angepasst, sodass die Krümmung der Bahn der auf dem Pendel und dem Seitenflansch abrollenden Kugel entspricht. Dadurch bedarf es nur minimaler seitlicher Führungskräfte für die Rollen.

Die Rollen weisen in einer Ausführungsform der Erfindung im Bereich ihres Kontaktes mit den äußeren Pendelmassen und den Seitenflanschen einen konstanten Durchmesser auf. Auf Zentrierborde oder dergleichen wird also verzichtet. Die Rollen weisen als einzige Abweichung von der Zylinderform einen umlaufenden Ring, der in der größeren lichten Weite des Langlochs der mittleren Pendelmasse angeordnet ist.

Das eingangs genannte Problem wird auch gelöst durch einen Antriebsstrang eines Kraftfahrzeuges umfassend eine erfindungsgemäße Fliehkraftpendeleinrichtung.

Ein Ausführungsbeispiel der Erfindung wird nachfolgend anhand der beiliegenden Zeichnungen näher erläutert. Dabei zeigen:
Fig. 1 ein Ausführungsbeispiel einer erfindungsgemäßen Fliehkraftpendeleinrichtung in einer Schnittdarstellung;
Fig. 2 den Pendelflansch mit Pendel gemäß Fig. 1 in einer Einzeldarstellung;
Fig. 3 den Schnitt X-X in Fig. 2;
Fig. 4 das Pendel in Fig. 3 in einer Einzeldarstellung;
Fig. 5 eine Prinzipskizze der erfindungsgemäßen Fliehkraftpendeleinrichtung in einer Mittelstellung des Pendels;
Fig. 6 die Prinzipskizze der Fig. 5 bei ausgelenktem Pendel.

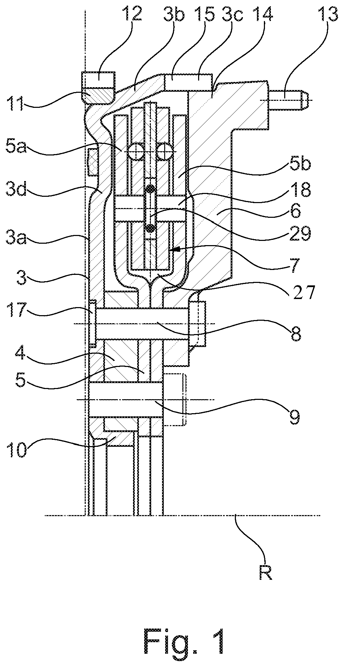

Fig. 1 zeigt ein Ausführungsbeispiel einer erfindungsgemäßen Fliehkraftpendeleinrichtung 1 in einer Schnittdarstellung. Die Fliehkraftpendeleinrichtung 1 ist im Wesentlichen rotationssymmetrisch zu einer Rotationsachse R. Unter der Umfangsrichtung wird hier eine Drehung um die Rotationsachse R, unter der axialen Richtung wird die Richtung parallel zur Rotationsachse R und unter der radialen Richtung eine Richtung senkrecht zur Rotationsachse R verstanden. Die Fliehkraftpendeleinrichtung 1 wird in Einbaulage in einem Antriebsstrang zwischen einem Verbrennungsmotor mit einer Kurbelwelle als Antriebswelle und einer Fahrzeugkupplung, die durch eine Ausrückeinrichtung betätigbar und deren Kupplungsscheibe mit einem Getriebe gekoppelt ist, angeordnet.

Die Fliehkraftpendeleinrichtung 1 umfasst eine Schwungmasse 2, die im Wesentlichen einen motorseitigen Deckel 3, einen Abstandsring 4, einen Pendelflansch 5 sowie eine Gegendruckplatte 6 umfasst. Der Pendelflansch 5 trägt zwei Pendel 7, die relativ zum Pendelflansch und damit relativ zur Schwungmasse 2 pendelnd gelagert sind, wie nachfolgend näher erläutert wird.

Der motorseitige Deckel 3, der Abstandsring 4, der Pendelflansch 5 sowie die Gegendruckplatte 6 sind mit Nietbolzen 8 miteinander fest verbunden. Die motorseitigen Nietköpfe 17 der Nietbolzen 8 sind in Stufenbohrungen angeordnet, sodass die Nietköpfe 17 nicht über die motorseitige Oberfläche des motorseitigen Deckels 3 hinausragen. Der motorseitige Deckel 3, der Abstandsring 4 und der Pendelflansch 5 weisen jeweils Bohrungen auf, durch die Befestigungsschrauben 9 ragen, mit denen die Fliehkraftpendeleinrichtung 1 mit einer nicht dargestellten Kurbelwelle eines Verbrennungsmotors verschraubt werden kann. Die Begriffe motorseitig und getriebeseitig sind so gewählt, da in Einbaulage in der zeichnerischen Darstellung der Fig. 1 auf der linken Seite der Verbrennungsmotor mit seiner Kurbelwelle und auf der rechten Seite des Zeichnungsblattes die Fahrzeugkupplung gelegen ist. Der motorseitige Deckel 3 weist an seinem Innenumfang einen Zentrierring 10 auf, dessen Außenseite am Innenumfang des Abstandsringes 4 anliegt und an dessen Innenumfang ein Wälzlager zur Zentrierung der nicht dargestellten Getriebeeingangswelle aufgenommen werden kann.

Am Außenumfang des motorseitigen Deckels 3 ist ein Anlasserzahnkranz 11 befestigt, beispielsweise verschweißt oder aufgeschrumpft oder aufgedrückt. Der Anlasserzahnkranz 11 weist an seiner Außenseite eine Verzahnung 12 auf, in die ein Ritzel eines elektrischen Anlassers eingespurt werden kann um den Verbrennungsmotor zu starten.

Die Schwungmasse 2 ist in Einbaulage drehmomentfest mit der Kurbelwelle des Verbrennungsmotors verbunden. Mittels Zapfen 13 wird ein hier nicht dargestellter Kupplungsdeckel mit der Gegendruckplatte 6 verbunden. Zusätzlich können weitere Schraub- oder Nietverbindungen zwischen Kupplungsdeckel und Gegendruckplatte 6 vorhanden sein. Der Kupplungsdeckel trägt weitere Elemente der Fahrzeugkupplung wie z. B. eine Druckplatte, die axial gegenüber der Gegendruckplatte 6 verlagerbar gelagert ist sowie Mittel zur axialen Verlagerung der Druckplatte. Die Mittel zur axialen Verlagerung der Druckplatte umfassen beispielsweise eine Tellerfeder, die über ein Ausrücklager durch eine Ausrückvorrichtung wie einen Zentralausrücker oder dergleichen mechanisch, elektrisch oder hydraulisch betätigt werden kann. Wird die Druckplatte auf die Gegendruckplatte gedrückt, so wird eine zwischen beiden angeordnete Kupplungsscheibe zwischen beiden eingeklemmt, sodass ein Reibmoment durch Gleitreibung bzw. Haftreibung nach dem Einkuppeln zwischen Kurbelwelle und Getriebeeingangswelle übertragen werden kann. Die Schwungmasse 2 kann auch Teil einer Mehrscheibenkupplung oder Teil einer Doppelkupplung sein.

Der motorseitige Deckel 3 umfasst einen im wesentlichen scheibenförmigen Scheibenteil 3a, an dessen Außenumfang der Anlasserzahnkranz 11 angeordnet ist, und in dem die Stufenbohrungen für die Nietbolzen 8 sowie die Bohrungen für die Befestigungsschrauben 9 angeordnet sind, sowie einen kegelförmigen Abschnitt 3b, der in einen zylindrischen Abschnitt 3c übergeht. Einprägungen 3d dienen der Versteifung des Deckels 3 sowie ggf. der Aufnahme von Auswuchtgewichten. Der zylindrische Abschnitt 3c ist auf einen Absatz 14 der Gegendruckplatte 6 aufgeschoben. Der Innendurchmesser des zylindrischen Abschnitts 3c korrespondiert mit dem Außendurchmesser des Absatzes 14. Der Absatz 14 ermöglicht eine passgenaue spanende Nachbearbeitung des Außenumfangs der meist als Stanz-Biege-Bauteil oder als Schmiedebauteil gefertigten Gegendruckplatte 6. Auf den Absatz 14 kann ggf. auch verzichtet werden. Zwischen dem Deckel 3 und der Gegendruckplatte 6 verbleibt ein Raum, in den der Pendelflansch 5 mit dem Pendel 7 ragt. Der zylindrische Abschnitt 3c weist zumindest eine Öffnung 15 oder mehrere über den Umfang verteilte Öffnungen 15 auf, die eine Zuführung von Schmiermittel zu dem Pendelflansch 5 und den Pendel 7 ermöglicht bzw. ermöglichen.

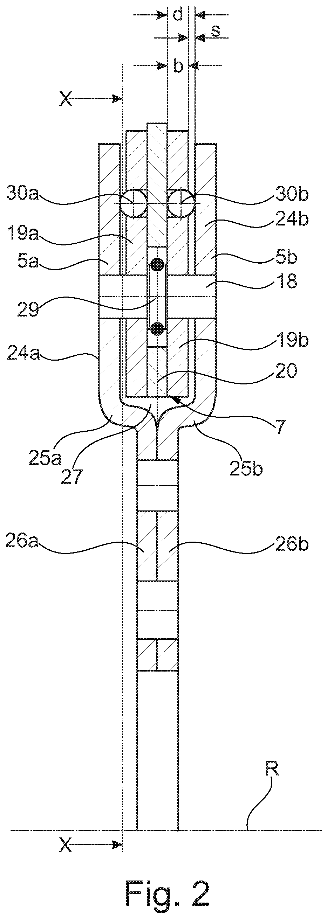

Fig. 2 zeigt den Pendelflansch 5 mit Pendel 7 gemäß Fig. 1 in einer Einzeldarstellung. Der Pendelflansch 5 umfasst zwei Seitenflansche, einen motorseitigen Seitenflansch 5a und einen getriebeseitigen Pendelflansch 5b, zwischen denen ein ringförmiger Pendelaufnahmeraum 16 verbleibt. In dem Pendelaufnahmeraum 16 sind die Pendel 7 mittels Rollen 18 gelagert, wobei die Rollen 18 durch beide Seitenflansche 5a, 5b sowie die Pendelmasse 7 ragen.

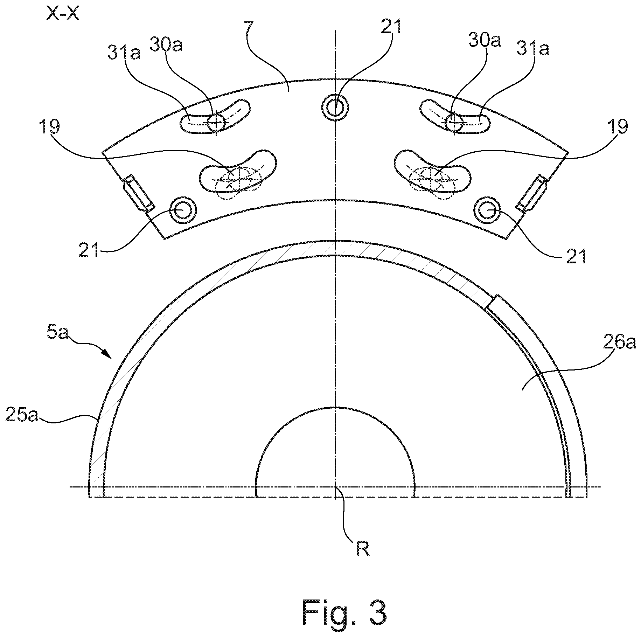

Die Pendel 7 umfassen jeweils zwei äußere Pendelmassen, eine motorseitige Pendelmasse 19a und eine kupplungsseitige Pendelmasse 19b, zwischen denen eine mittlere Pendelmasse 20 angeordnet ist. Die äußeren Pendelmassen 19a, 19b und die mittlere Pendelmasse 20 sind mittels Nieten 21, siehe dazu Fig. 3, fest miteinander verbunden.

Die Seitenflansche 5a, 5b umfassen jeweils einen ringscheibenförmigen radial äußeren Pendelaufnahmering 24a, 24b, der jeweils in einen axial verlaufenden Hohlzylinder 25a, 25b und dieser wiederum in einen scheibenförmigen Befestigungsring 26a, 26b übergeht. Die Befestigungsringe 26a, 26b liegen flächig aneinander an. Durch die Hohlzylinder 25a, 25b sind die Pendelaufnahmeringe 24a, 24b jeweils in unterschiedliche Richtungen axial zu den zugehörigen Befestigungsring 26a, 26b, in der Schnittdarstellung nach Art einer Kröpfung, versetzt angeordnet und bilden einen ringförmigen Aufnahmeraum 27 zur Aufnahme der Pendel 7.

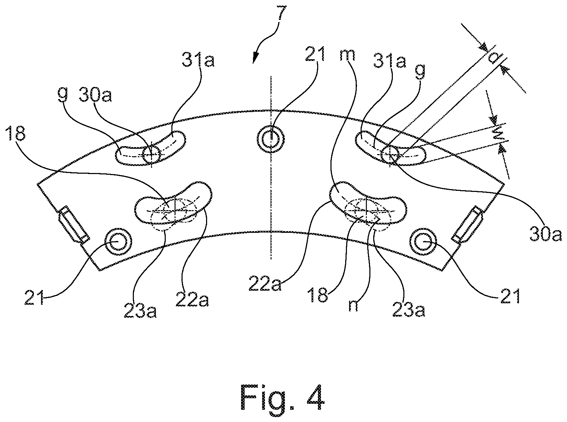

Fig. 3 zeigt den Schnitt X-X in Fig. 2 und damit eine Draufsicht auf ein Pendel 7. Dargestellt ist neben dem Pendel 7 ein Schnitt durch den Hohlzylinder 25a und eine Draufsicht auf den Befestigungsring 26a des Seitenflansches 5a. Fig. 4 zeigt das Pendel 7 in einer Einzeldarstellung.

Die Rollen 18 sind, siehe dazu Fig. 4, in Langlöchern 22a, 22b der äußeren Pendelmassen 19a, 19b sowie in Langlöchern 23a, 23b der Seitenflansche 5a, 5b gelagert. Die Langlöcher 22, 23 weisen jeweils eine lichte Weite, das ist der kleinste Abstand zwischen zwei gegenüberliegenden Wänden, auf, die dem Durchmesser der Rollen 18 zuzüglich eines Spiels entspricht. Die Rollen lassen sich daher entlang einer Mittellinie m der Langlöcher 22a, 22b bzw. einer Mittellinie n der Langlöcher 23a, 23b verschieben. In der mittleren Pendelmasse 20 sind Langlöcher 28 angeordnet, deren lichte Weite größer ist als die lichte Weite der Langlöcher 22a, 22b der äußeren Pendelmassen 19a, 19b. Die Rollen 18 umfassen einen umlaufenden Ring 29, der in der größere lichte Weite des Langlochs 28 der mittleren Pendelmasse 20 angeordnet ist. Durch die geringere lichte Weite der Langlöcher 22a, 22b der äußeren Pendelmassen 19a, 19b ist die Rolle 18 in axialer Richtung festgelegt.

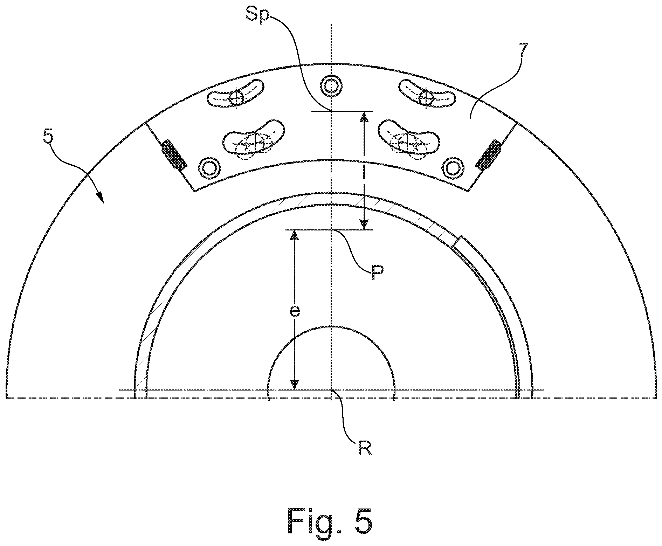

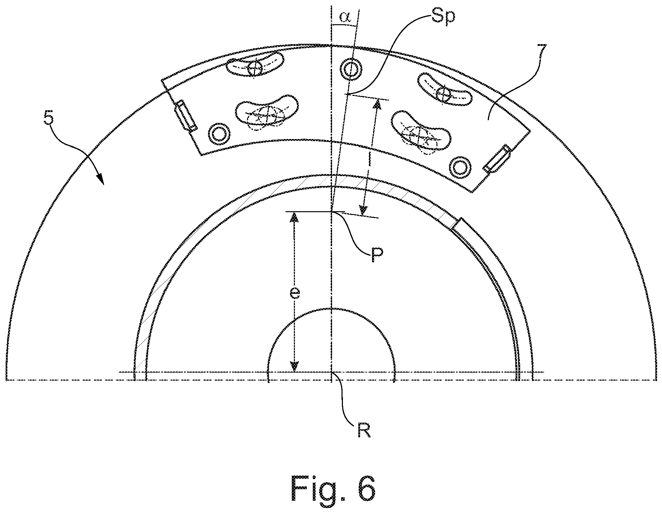

Die Rollen 18 bilden mit den Langlöchern 22a, 22b und 23a, 23b eine Kulissenführung für die Pendel 7, die eine Bewegung der Pendel 7 entlang vorgegebener Bahnen relativ zum Pendelflansch 5 ermöglicht. Die Kulissenführung erlaubt eine Pendelbewegung des Pendels 7 um einen Pendelmittelpunkt P. Die geometrischen Verhältnisse sind in den Figuren 5 und 6 dargestellt. Fig. 5 zeigt eine Prinzipskizze der erfindungsgemäßen Fliehkraftpendeleinrichtung 1 in der Draufsicht in einer Mittelstellung des Pendels, Fig. 6 zeigt die Prinzipskizze bei ausgelenktem Pendel. Die Laufbahnen der Rollen 18 gegenüber dem Pendelflansch 5 bzw. den Pendeln 7 sind so ausgelegt, vergleiche dazu Fig. 5, dass sich der Schwerpunkt Sp der Pendel 7 auf einer Kreisbahn mit einem Radius I als Pendelachse um einen Mittelpunkt P, den Pendelmittelpunkt, bewegt, wobei der Radius I der Kreisbahn einen Abstand e zur Rotationsachse R aufweist. Die Pendelachse ist eine Gerade durch den Schwerpunkt Sp des Pendels und den Mittelpunkt P. Bei der Pendelbewegung pendelt das Pendel 7 um einen Winkel α (griechisch alpha) um eine Neutralstellung bzw. Mittelstellung. In der Neutralstellung bzw. Mittelstellung ist der Winkel α = 0 und der Schwerpunkt Sp der Pendelmasse liegt auf einer Geraden durch den Mittelpunkt P und die Rotationsachse R. Diese Bewegung erzeugt einen variablen Abstand des Schwerpunkts Sp zur Rotationsachse R. Die Quadratwurzel aus dem Verhältnis Abstand e zu Radius I ist ein Maß für die Eigenkreisfrequenz des Fliehkraftpendels relativ zur Kreisfrequenz der Rotation um die Rotationsachse R. Die Eigenkreisfrequenz bzw. Tilgerfrequenz des Fliehkraftpendels ist daher proportional zur Drehzahl der Fliehkraftpendeleinrichtung. Bei Abstimmung nahe oder direkt auf die Haupterregeranordnung des Antriebsstrangs erfolgt eine Reduzierung der Schwingungsamplitude über dem gesamten Drehzahlbereich.

An der dem jeweiligen Seitenflansch 5a, 5b zugewandten Oberfläche der Pendel 7 sind jeweils Kugeln 30a, 30b angeordnet. Die Kugeln 30a, 30b ragen über die in radialer und Umfangsrichtung verlaufende Oberfläche der Pendel 7 hinaus und stehen mit dem jeweils der Kugel 30a, 30b zugeordneten Seitenflansch 5a, 5b in Kontakt. Auf der dem Kontaktpunkt mit dem Seitenflansch 5a, 5b abgewandten Seite stützen sich die Kugeln 30a, 30b an der mittleren Pendelmasse 20 ab. Die Kugel 30a stützt sich folglich an dem Seitenflansch 5a und der mittleren Pendelmasse 20 ab, die Kugel 30b stützt sich an dem Seitenflansch 5b und der mittleren Pendelmasse 20 ab. Der Durchmesser d der Kugeln 30a, 30b ist größer als die Dicke b der Pendelmassen 19a, 19b, sodass zwischen den Pendelmassen 19a, 19b und dem jeweiligen Seitenflansch 5a, 5b ein Spalt s verbleibt. Die geometrischen Größen d, b und s sind nur anhand der Kugel 30b sowie der Pendelmasse 19b und dem Seitenflansch 5b gezeigt, für die andere Seite sind die Größen entsprechend.

Die Kugeln 30a sind in Langlöchern 31a der Pendelmasse 19a geführt, entsprechend sind die Kugeln 30b in Langlöchern 31b der Pendelmasse 19b geführt. Die Langlöcher 30a, 30b weisen eine lichte Weite w auf, die größer ist als der Durchmesser d der Kugeln 30a, 30b. Die Kugeln 30a, 30b können entlang der durch die Langlöcher 31a, 31 b vorgegebenen Bahnen auf der mittleren Pendelmasse 20 abrollen. Die Langlöcher 31a, 31b weisen eine bogenförmige Längsachse g auf.

Die Langlöcher 31a, 31b bilden jeweils Nute mit der mittleren Pendelmasse 20 als Nutgrund. Die Ränder der Langlöcher 31a, 31b bilden die Seitenwände der Nute. Die Nute weisen dadurch einen rechteckigen Querschnitt auf. Die Enden der Nute bzw. der Langlöcher 31a, 31b sind abgerundet, wobei der Durchmesser der Rundung der lichten Weite der Langlöcher entspricht.

Die Kugeln 30a, 30b bilden eine Führung für die Pendel 7 gegenüber den Seitenflanschen 5a, 5b in Umfangsrichtung und legen die Pendel 7 dabei in axialer Richtung gegenüber den Seitenflanschen 5a, 5b fest.

Die mittlere Pendelmasse 20 sowie die Seitenflansche 5a, 5b sind in den Bereichen, in denen diese Kontakt mit den Kugeln 30a, bzw. 30b haben oberflächengehärtet. Ebenso sind die Kugeln 30a, 30b selbst oberflächengehärtet. Auf gehärtete Oberflächen kann je nach Material ggf. verzichtet werden.

### Bezugszeichenliste

- 1: Fliehkraftpendeleinrichtung
- 2: Schwungmasse
- 3: Deckel
- 3a: Scheibenteil
- 3b: kegelförmiger Abschnitt
- 3c: zylindrischer Abschnitt
- 3d: Einprägung
- 4: Abstandsring
- 5: Pendelflansch
- 5a: Seitenflansch
- 5b: Seitenflansch
- 6: Gegendruckplatte
- 7: Pendel
- 8: Nietbolzen
- 9: Befestigungsschrauben
- 10: Zentrierring
- 11: Anlasserzahnkranz
- 12: Verzahnung
- 13: Zapfen
- 14: Absatz
- 15: Öffnungen
- 16: Pendelaufnahmeraum
- 17: Nietkopf
- 18: Rolle
- 19a: motorseitige äußere Pendelmasse
- 19b: kupplungsseitige äußere Pendelmasse
- 20: mittlere Pendelmasse
- 21: Niet
- 22a: Langloch für Rolle 17 in Pendelmasse 19a
- 22b: Langloch für Rolle 17 in Pendelmasse 19b
- 23a: Langloch für Rolle 17 in Seitenflansch 5a
- 23b: Langloch für Rolle 17 in Seitenflansch 5b
- 24a: Pendelaufnahmering
- 24b: Pendelaufnahmering
- 25a: Hohlzylinder
- 25b: Hohlzylinder
- 26a: Befestigungsring
- 26b: Befestigungsring
- 27: Aufnahmeraum
- 28: Langloch mittlere Pendelmasse
- 29: umlaufender Ring
- 30a, 30b: Kugeln
- 31a: Langloch für Kugel 30a in Pendelmasse 19a
- 31b: Langloch für Kugel 30b in Pendelmasse 19b
- g, m, n: Längsachsen
- d: Durchmesser
- b: Dicke
- s: Spaltbreite
- w: lichte Weite des Langlochs

## Patentansprüche

1. Fliehkraftpendeleinrichtung (1) zur Anordnung im Antriebsstrang eines Kraftfahrzeugs, mit wenigstens einem Pendel (7), das an einem Pendelflansch (5) angeordnet ist und entlang einer vorgegebenen Pendelbahn eine Relativbewegung zu dem Pendelflansch (5) ausführen kann, um hierbei einen variablen Abstand zur Rotationsachse des Pendelflansches (5) einzunehmen, wobei das Pendel (7) zwischen Seitenflanschen (5a, 5b) des Pendelflansches (5) angeordnet ist und sich an Rollen (18) abstützt, welche in Langlöchern (22a, 22b) des Pendels (7) und Langlöchern (23a, 23b) der Seitenflansche (5a, 5b) gelagert sind, wobei das Pendel (7) mit mindestens einem Wälzmittel (30a, 30b) gegenüber zumindest einem der Seitenflansche (5a, 5b) gelagert ist, wobei das Wälzmittel eine Kugel (30a, 30b) ist, wobei die zumindest eine Kugel (30a, 30b) in zumindest einer Nut (31a, 31b) in dem Pendel (7) angeordnet ist, **dadurch gekennzeichnet, dass** das Pendel eine mittlere Pendelmasse (20) und beiderseits dieser angeordnete äußere Pendelmassen (19a, 19b) umfasst, wobei in zumindest einer der äußeren Pendelmassen (19a, 19b) mindestens ein Langloch (31a, 31b) angeordnet ist, wobei der Durchmesser (d) der Kugel (30a, 30b) größer ist als die Dicke (b) der äußeren Pendelmasse (19a, 19b)

2. Fliehkraftpendeleinrichtung nach Anspruch 1, **dadurch gekennzeichnet, dass** beiderseits des Pendels (7) jeweils mindestens eine Kugel (30a, 30b) abgeordnet ist.

3. Fliehkraftpendeleinrichtung nach einem der Ansprüche 1 oder 2, **dadurch gekennzeichnet, dass** beiderseits des Pendels (7) zwei Kugeln (30a, 30b) abgeordnet sind.

4. Fliehkraftpendeleinrichtung nach einem der Ansprüche1 bis 3, **dadurch gekennzeichnet, dass** die Langlöcher (31a, 31b) gekrümmt sind.

5. Fliehkraftpendeleinrichtung nach einem der Ansprüche 1 bis 4, **dadurch gekennzeichnet, dass** die Rollen (18) im Bereich ihres Kontaktes mit den äußeren Pendelmassen (19a, 19b) und den Seitenflanschen (5a, 5b) einen konstanten Durchmesser aufweisen.

6. Antriebsstrang eines Kraftfahrzeuges umfassend eine Fliehkraftpendeleinrichtung (1) nach einem der Ansprüche 1 bis 5.

## Claims

1. A centrifugal pendulum absorber device (1) for arrangement in the drive train of a motor vehicle, comprising at least one pendulum (7) which is arranged on a pendulum flange (5) and can perform a relative movement with respect to the pendulum flange (5) along a predetermined pendulum path, in order to thereby assume a variable distance from the axis of rotation of the pendulum flange (5), wherein the pendulum (7) is arranged between side flanges (5a, 5b) of the pendulum flange (5) and is supported on rollers (18) which are mounted in slots (22a, 22b) in the pendulum (7) and slots (23a, 23b) in the side flanges (5a, 5b), wherein the pendulum (7) is mounted with at least one rolling means (30a, 30b) opposite at least one of the side flanges (5a, 5b), wherein the rolling means is a ball (30a, 30b), wherein the at least one ball (30a, 30b) is arranged in at least one groove (31a, 31b) in the pendulum (7), **characterised in that** the pendulum comprises a middle pendulum mass (20) and outer pendulum masses (19a, 19b), arranged on both sides thereof, wherein at least one slot (31a, 31b) is arranged in at least one of the outer pendulum masses (19a, 19b), wherein the diameter (d) of the ball (30a, 30b) is greater than the thickness (b) of the outer pendulum mass (19a, 19b).

2. The centrifugal pendulum absorber device according to claim 1, **characterised in that** at least one ball (30a, 30b) is arranged on both sides of the pendulum (7).

3. The centrifugal pendulum absorber device according to one of claims 1 or 2, **characterised in that** two balls (30a, 30b) are arranged on both sides of the pendulum (7).

4. The centrifugal pendulum absorber device according to one of claims 1 to 3, **characterised in that** the slots (31a, 31b) are curved.

5. The centrifugal pendulum absorber device according to one of claims 1 to 4, **characterised in that** the rollers (18) have a constant diameter in the region of their contact with the outer pendulum masses (19a, 19b) and the side flanges (5a, 5b).

6. A drive train of a motor vehicle, comprising a centrifugal pendulum absorber device (1) according to one of claims 1 to 5.

## Revendications

1. Dispositif d'amortisseur harmonique avec un pendule centrifuge (1) destiné à être disposé dans la chaîne cinématique d'un véhicule à moteur, comportant au moins un pendule (7), lequel est disposé sur une bride de pendule (5) et peut effectuer un mouvement relatif par rapport à la bride de pendule (5) le long d'une trajectoire de pendule prédéterminée afin de prendre ce faisant un écartement variable par rapport à l'axe de rotation de la bride de pendule (5), le pendule (7) étant disposé entre les brides latérales (5a, 5b) de la bride de pendule (5) et reposant sur des galets (18) lesquels sont logés dans des trous oblongs (22a, 22b) du pendule (7) et des trous oblongs (23a, 23b) des brides latérales (5a, 5b), le pendule (7) étant supporté par au moins un moyen de roulement (30a, 30b) opposé à au moins l'une des brides latérales (5a, 5b), le moyen de roulement étant une bille (30a, 30b), une bille (30a, 30b) au moins étant disposée dans au moins une rainure (31a, 31b) dans le pendule (7), **caractérisé en ce que** le pendule comprend une masse pendulaire moyenne (20) et des masses pendulaires externes (19a, 19b) disposées de part et d'autre de cette dernière, au moins un trou oblong (31a, 31b) étant disposé dans au moins l'une des masses pendulaires externes (19a, 19b), le diamètre (d) de la bille (30a, 30b) étant supérieur à l'épaisseur (b) de la masse pendulaire externe (19a, 19b).

2. Dispositif d'amortisseur harmonique avec un pendule centrifuge selon la revendication 1, **caractérisé en ce qu'**au moins une bille (30a, 30b) est disposée des deux côtés du pendule (7).

3. Dispositif d'amortisseur harmonique avec un pendule centrifuge selon l'une quelconque des revendications 1 ou 2, **caractérisé en ce que** deux billes (30a, 30b) sont disposées de part et d'autre du pendule (7).

4. Dispositif d'amortisseur harmonique avec un pendule centrifuge selon l'une quelconque des revendications 1 à 3, **caractérisé en ce que** les trous oblongs (31a, 31b) sont courbés.

5. Dispositif d'amortisseur harmonique avec un pendule centrifuge selon l'une quelconque des revendications 1 à 4, **caractérisé en ce que** les galets (18) ont un diamètre constant au niveau de leur contact avec les masses pendulaires externes (19a, 19b) et les brides latérales (5a, 5b).

6. Chaîne cinématique d'un véhicule automobile comprenant un dispositif d'amortisseur harmonique avec un pendule centrifuge (1) selon l'une quelconque des revendications 1 à 5.
